# EUROPEAN PATENT APPLICATION

(11) **EP 3 576 202 A1**
(43) Date of publication of application: **04.12.2019**
(21) Application number: 19167013.2
(22) Date of filing: 03.04.2019
(51) Int. Cl.: H01M 8/18, H01M 8/0612, H01M 8/06, H01M 8/04082, H01M 8/04089, H01M 8/04119, H01M 8/04223, H01M 8/04007

(54) **FUEL CELL SYSTEM**

(30) Priority: 18.05.2018 JP 2018096022
(71) Applicant: Panasonic Intellectual Property Management Co., Ltd., Osaka-shi, Osaka 540-6207 (JP)
(72) Inventor: KITAZAWA, Yosuke, Osaka-shi, Osaka 540-6207 (JP); FAYOLLE, Marine, Osaka-shi, Osaka 540-6207 (JP); TAMURA, Satoru, Osaka-shi, Osaka 540-6207 (JP); HAYASHI, Takao, Osaka-shi, Osaka 540-6207 (JP)
(74) Representative: Grünecker Patent- und Rechtsanwälte PartG mbB

(57) **Abstract**

A fuel cell system includes a fuel cell that includes an anode and a cathode and generates electricity by reducing a mediator at the cathode, a regenerator that oxidizes the mediator, a fuel gas feed path through which fuel gas to be supplied to the anode flows, a humidifier that is disposed in the fuel gas feed path and humidifies the fuel gas, and a water collection path that extends from the regenerator to the humidifier and guides to the humidifier at least one selected from steam produced at the regenerator and condensation formed from the steam.

## Description

### BACKGROUND

### 1. Technical Field

The present disclosure relates to a fuel cell system.

### 2. Description of the Related Art

In a fuel cell in the related art, hydrogen is oxidized at the anode, and oxygen is reduced at the cathode. The cathodic reduction of oxygen proceeds slowly, and primarily because of this, fuel cells are not very efficient in terms of reaction rates. To address this drawback, redox-flow fuel cells are under development.

A redox-flow fuel cell is a fuel cell that includes a mediator for promoting at least one of the cathodic and anodic reactions. In an exemplary configuration of a redox-flow fuel cell, hydrogen gas is supplied to the anode, and a mediator solution is supplied to the cathode.

A system built with a redox-flow fuel cell usually has a regenerator for regenerating the mediator (International Publication No. 2015/049812). The system regenerates the mediator at the regenerator and supplies the regenerated mediator to the cathode again so that reactions in the fuel cell can occur repeatedly. For example, at the regenerator, chemical reaction between the reduced form of the mediator and oxygen is promoted through exposure of a mediator solution to air. As a result, the mediator is regenerated into its oxidized form.

### SUMMARY

In a system built with a redox-flow fuel cell, water is formed as the mediator is regenerated.

Making effective use of the water formed at the regenerator would improve the energy efficiency of the fuel cell system.

In one general aspect, the techniques disclosed here feature a fuel cell system. The fuel cell system includes a fuel cell that includes an anode and a cathode and generates electricity by reducing a mediator at the cathode, a regenerator that oxidizes the mediator, a fuel gas feed path through which fuel gas to be supplied to the anode flows, a humidifier that is disposed in the fuel gas feed path and humidifies the fuel gas, and a water collection path that extends from the regenerator to the humidifier and guides to the humidifier at least one selected from steam produced at the regenerator and condensation formed from the steam.

According to the present disclosure, the energy efficiency of fuel cell systems can be improved.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 illustrates the construction of a fuel cell system according to Embodiment 1 of the present disclosure;
Fig. 2 illustrates the construction of the condenser of the fuel cell system depicted in Fig. 1;
Fig. 3 illustrates the construction of a fuel cell system according to Embodiment 2 of the present disclosure;
Fig. 4 illustrates the construction of a fuel cell system according to Embodiment 3 of the present disclosure;
Fig. 5 is a flowchart illustrating the control of a valve in a gas exhaust path; and
Fig. 6 is a flowchart illustrating the control of a valve in a water drain path.

### DETAILED DESCRIPTION

### Underlying Knowledge Forming Basis of the Present Disclosure

As water forms with the regeneration of the mediator, the concentration of the mediator in the mediator solution decreases. The decreased concentration of the mediator leads to less efficient reactions and therefore to lower performance of the fuel cell system in power generation. Excess water, therefore, needs to be drained to maintain the concentration of the mediator.

It is hoped that fuel cell systems will operate with reduced loss of energy by making effective use of water formed at the regenerator.

The inventors conceived of using water formed at a regenerator to humidify fuel gas and, on the basis of this conception, completed the fuel cell system according to an aspect of the present disclosure.

### Overview of Aspects of the Disclosure

A fuel cell system according to a first aspect of the present disclosure includes: a fuel cell that includes an anode and a cathode and generates electricity by reducing a mediator at the cathode; a regenerator that oxidizes the mediator; a fuel gas feed path through which fuel gas to be supplied to the anode flows; a humidifier that is disposed in the fuel gas feed path and humidifies the fuel gas; and a water collection path that extends from the regenerator to the humidifier and guides to the humidifier at least one selected from steam produced at the regenerator and condensation formed from the steam.

The first aspect improves the energy efficiency of the fuel cell system.

In a second aspect of the present disclosure, for example, the fuel cell system according to the first aspect may further include a condenser that is disposed in the water collection path and produces the condensation by condensing the steam discharged from the regenerator. The second aspect allows for efficient humidification of the fuel gas at the humidifier.

In a third aspect of the present disclosure, for example, the condenser in the fuel cell system according to the first or second aspect may be positioned at a location gravitationally higher than the humidifier. The third aspect allows the condensation formed at the condenser to be transported to the humidifier without using a pump or other accessory devices.

In a fourth aspect of the present disclosure, for example, the fuel cell system according to the third aspect may further include an oxidant feed path through which an oxidant for oxidizing the mediator at the regenerator flows. The condenser may be a heat exchanger that exchanges heat between the oxidant flowing through the oxidant feed path and the steam flowing through the water collection path, and the oxidant may be heated by the steam at the condenser. The fourth aspect further improves the energy efficiency of the fuel cell system by reducing energy loss.

In a fifth aspect of the present disclosure, for example, the fuel cell system according to any one of the first to fourth aspects may further include a circulation path that connects the fuel cell and the regenerator in such a manner that a solution containing the mediator circulates between the cathode of the fuel cell and the regenerator. The fifth aspect ensures the cathodic reaction proceeds smoothly.

The following describes embodiments of the present disclosure with reference to drawings. The present disclosure is not limited to these embodiments.

### Embodiment 1

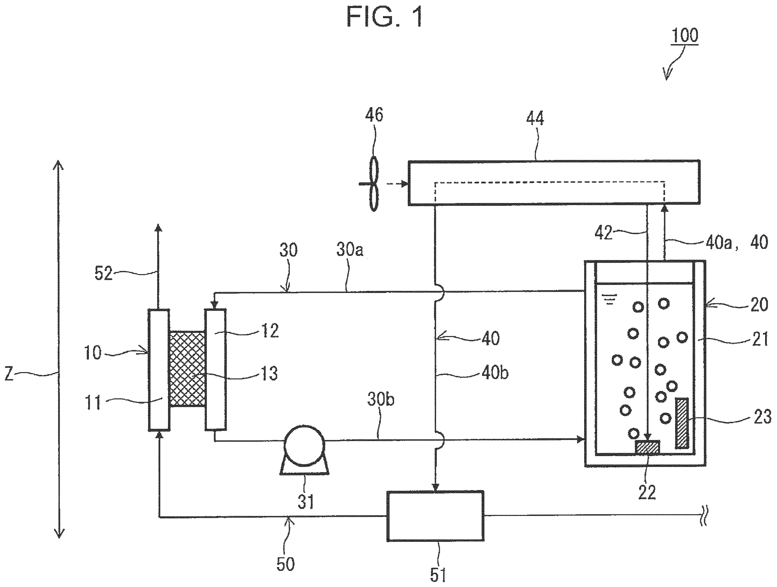

Fig. 1 illustrates the construction of a fuel cell system according to Embodiment 1 of the present disclosure. The fuel cell system 100 includes a fuel cell 10 and a regenerator 20. The fuel cell 10 is a redox-flow fuel cell. The regenerator 20 is connected to the fuel cell 10 in such a manner that a mediator solution can circulate between the fuel cell 10 and regenerator 20.

The fuel cell system 100 has several advantages, including reduced consumption of a costly noble-metal catalyst, highly efficient power generation owing to a smaller overvoltage, and a simpler cooling system by virtue of the use of a mediator solution.

The fuel cell 10 has an anode 11 (fuel electrode), a cathode 12 (oxidant electrode), and an electrolyte membrane 13. The electrolyte membrane 13 is between the anode 11 and the cathode 12. The anode 11, cathode 12, and electrolyte membrane 13 form a membrane electrode assembly. The fuel cell 10 may be a single cell or a stack of multiple cells. The fuel cell 10 generates electricity by oxidizing fuel gas at the anode 11 and reducing a mediator at the cathode 12. The use of a mediator is not limited to the cathode 12; the reaction at the anode 11 may likewise involve a mediator.

The anode 11 is a porous electrode. The electrode is made of an electrically conductive material, such as a carbon material. Examples of carbon materials include glassy carbon, carbon nanotubes, and carbon felt. If the fuel gas is oxidized directly on the anode 11, the electrically conductive material carries, for example, a catalyst, such as platinum, thereon. If the reaction at the anode 11 involves a mediator, the catalyst can be omitted.

The cathode 12 is, for example, a porous substrate. Porous substrates that can be used as the anode 11 can also be used as the cathode 12. Since the fuel cell 10 performs the reaction at its cathode 12 using a mediator, the cathode 12 requires no catalyst, such as platinum. The cathode 12, however, may have a catalyst.

The electrolyte membrane 13 is a membrane that conducts protons. The material for the electrolyte membrane 13 is not critical. To name a few, the electrolyte membrane 13 can be a fluoropolymer or hydrocarbon-polymer electrolyte membrane. An exemplary fluoropolymer electrolyte membrane is one made from a perfluorosulfonic acid polymer, such as Nafion® (DuPont). An exemplary hydrocarbon-polymer electrolyte membrane is one made with a hydrocarbon polymer that has protonic acid groups (groups that conduct protons) introduced thereto. The hydrocarbon polymer can be, for example, an engineering or general-purpose plastic. Examples of engineering plastics include polyether ether ketone, polyether ketone, polyether sulfone, polyphenylene sulfide, polyphenylene ether, and polyparaphenylene. Examples of general-purpose plastics include polyethylene, polypropylene, and polystyrene. The protonic acid groups can be, for example, sulfonic acid, carboxylic acid, phosphoric acid, or boronic acid groups.

The regenerator 20 is formed by, for example, a container 21. The regenerator 20 oxidizes the mediator. The container 21 has an inner space in which the mediator solution can be held. The container 21 may be thermally insulating.

The regenerator 20 may include a bubbler 22. The bubbler 22 helps an oxidant come into contact with the mediator solution by producing tiny bubbles of the oxidant. The bubbler 22 is inside the container 21. In this embodiment, the bubbler 22 is on the bottom of the container 21. To the bubbler 22, an oxidant is supplied from outside. The oxidant is blown out of the bubbler 22, and the resulting bubbles rise in the mediator solution, thereby oxidizing the mediator. In this embodiment, the oxidant is a gas, typically atmospheric oxygen (oxygen gas).

The regenerator 20 may further have a heater 23. The heater 23 may be inside the container 21 or outside the container 21. The heater 23 may be touching the mediator solution directly, or heat produced by the heater 23 may be transmitted to the mediator solution via the container 21. In this embodiment, the heater 23 is inside the container 21. The heater 23 is, for example, an electrically powered resistance heater. The user can heat the mediator solution by turning on the heater 23. The use of a heater 23 allows the mediator solution to be heated to a temperature suitable for the regeneration quickly and, moreover, helps steam form out of the mediator solution by allowing the mediator solution to be maintained at a suitable temperature.

The mediator solution contains a mediator and a solvent. Any kind of mediator can be used. To name a few, the mediator can be a polyoxometalate, metal ions, or a metal complex. Polyoxometalates that can be used include phosphomolybdic acid, phosphovanadic acid, and phosphotungstic acid, and metals polyoxometalates can have include vanadium, molybdenum, and tungsten. Examples of metal complexes include porphyrin metal complexes, metal complexes having TEMPO (2,2,6,6-tetramethylpiperidine 1-oxyl) as ligands, and metal complexes having an oxidase or its derivative as ligands. The oxidase can be, for example, galactose oxidase, bilirubin oxidase, or glucose oxidase. The mediator solution may contain multiple mediators. The solvent, too, can be of any kind. To name a few, the solvent can be water, aqueous sulfuric acid, or aqueous phosphoric acid. The pH of the solution may be acidic. The mediator solution may contain an appropriate electrolyte.

The concentration of the mediator in the mediator solution has been adjusted to an appropriate level, at which the reaction at the cathode 12 proceeds smoothly. The concentration of the mediator can be adjusted in accordance with the kind of mediator. If the mediator solution is an aqueous solution of a polyoxometalate (POM), the concentration of the POM in the aqueous solution is, for example, 0.05 mol/liter or more or may even be 0.1 mol/liter or more.

The fuel cell system 100 further includes a circulation path 30. The circulation path 30 connects the fuel cell 10 and the regenerator 20. Through the circulation path 30, the mediator solution can circulate between the cathode 12 of the fuel cell 10 and the regenerator 20. To be more specific, the circulation path 30 allows the mediator reduced at the cathode 12 to be oxidized at the regenerator 20 and supplied back to the cathode 12. This ensures the reaction at the cathode 12 proceeds smoothly.

The circulation path 30 is equipped with a pump 31. When the pump 31 is operated, the mediator solution circulates between the cathode 12 and the regenerator 20 through the circulation path 30. In this embodiment, the circulation path 30 has a first path 30a and a second path 30b. The first path 30a connects the solution outlet of the regenerator 20 and the inlet of the cathode 12. The second path 30b connects the outlet of the cathode 12 and the solution inlet of the regenerator 20. The pump 31 may be in the first path 30a or the second path 30b. There may even be a pump 31 in the first path 30a and another in the second path 30b.

Each of the first path 30a and second path 30b of the circulation path 30 can be formed by at least one pipe. There may be components other than the pump 31 along the circulation path 30, such as connectors, filters, valves, flowmeters, and sensors. These also apply to the other paths described hereinafter.

The fuel cell system 100 further includes a fuel gas feed path 50 and a humidifier 51. The fuel gas feed path 50 is a passage through which fuel gas to be supplied to the anode 11 flows. The fuel gas is, for example, a hydrogencontaining gas. The fuel gas feed path 50 extends from a fuel gas source (not illustrated) and is connected to the anode 11. The fuel gas source can be, for example, a reformer or hydrogen storage tank.

The humidifier 51 is disposed in the fuel gas feed path 50. While passing through the humidifier 51, the fuel gas is humidified at the humidifier 51. As a result, humidified fuel gas is supplied to the anode 11.

It is not critical how the humidifier 51 humidifies the fuel gas. To name a few, bubbler humidification and shower humidification can be used. In bubbler humidification, the fuel gas is passed through liquid water. In shower humidification, the fuel gas is sprayed with water.

The fuel cell system 100 further includes a water collection path 40. The water collection path 40 extends from the regenerator 20 to the humidifier 51. Through the water collection path 40, at least one selected from steam produced at the regenerator 20 and condensation formed from the steam is guided to the humidifier 51. This reuse at the humidifier 51 of excess water and heat discharged from the regenerator 20 improves the energy efficiency of the fuel cell system 100.

That is, in this embodiment, there is no need for occasional supply of water to the humidifier 51 from outside, but rather the fuel cell system 100 can prepare the water by itself (or achieve "water independence"). This brings down the costs for the fuel cell system 100 to be run, for example by eliminating the need for frequent replacement of ion-exchange resins for removing metal ions from public water. Moreover, a supply of steam and/or condensation warmed to modestly high temperatures to the humidifier 51 prevents the humidifier 51 from freezing in winter. This means the fuel cell system 100 can be further improved in energy efficiency by omitting a heater, for example, for freezing prevention.

The fuel cell system 100 further includes a condenser 44. The condenser 44 is disposed in the water collection path 40 and produces condensation by condensing steam discharged from the regenerator 20. The water collection path 40 includes an upstream section 40a and a downstream section 40b. The upstream section 40a lies between the regenerator 20 and the condenser 44. Through the upstream section 40a, steam is sent from the regenerator 20 to the condenser 44. The downstream section 40b lies between the condenser 44 and the humidifier 51. Through the downstream section 40b, condensation is sent from the condenser 44 to the humidifier 51. Supplying condensation to the humidifier 51 results in more efficient humidification of the fuel gas at the humidifier 51 and a broader range of humidifiers 51 that can be used.

The fuel cell system 100 further includes an oxidant feed path 42. The oxidant feed path 42 is connected to the regenerator 20, specifically to the bubbler 22 of the regenerator 20. The oxidant feed path 42 is a passage through which an oxidant for oxidizing the mediator at the regenerator 20 flows. The oxidant feed path 42 is equipped with an oxidant feeder 46. The oxidant feeder 46 supplies the oxidant to the regenerator 20 through the oxidant feed path 42. The oxidant feeder 46 can be of any kind with which the oxidant can be blown into the mediator solution. An example of an oxidant feeder 46 is a blower.

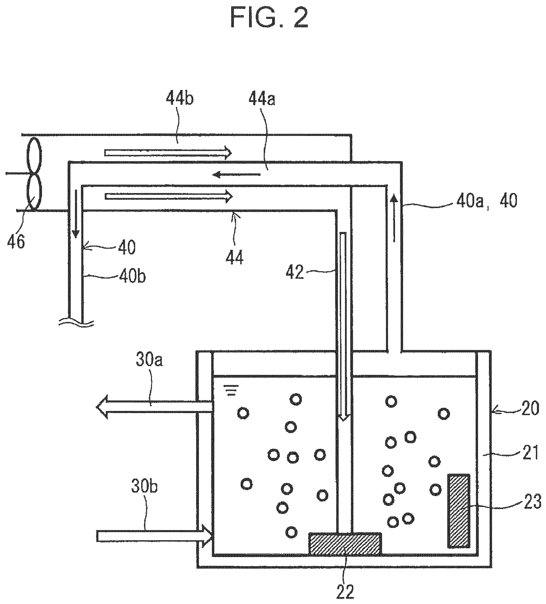

Fig. 2 illustrates the construction of the condenser 44. The condenser 44 is a heat exchanger that exchanges heat between the oxidant flowing through the oxidant feed path 42 and the steam flowing through the water collection path 40. The condenser 44 has a first passage 44a and a second passage 44b. The first passage 44a is connected to the water collection path 40, and steam discharged from the regenerator 20 flows through the first passage 44a. The second passage 44b is connected to the oxidant feed path 42, and the oxidant to be supplied to the regenerator 20 flows through the second passage 44b. The first passage 44a runs, for example, through the inside of the second passage 44b. The oxidant is heated in the condenser 44 by the gas flowing through the second passage 44b (containing steam and the oxidant). The gas discharged from the regenerator 20 (containing steam and the oxidant) is cooled in the second passage 44b of the condenser 44 by the oxidant flowing through the first passage 44a.

In this embodiment, an oxidant is supplied to the regenerator 20 from the outside of the fuel cell system 100 to regenerate the mediator. Exposure of the mediator solution to a low-temperature oxidant reduces the temperature of the mediator solution, slowing down the reaction for the regeneration of the mediator. Giving the heat of the steam and oxidant discharged from the regenerator 20 to the oxidant to be supplied to the regenerator 20, however, raises the temperature of the oxidant to be supplied to the regenerator 20, thereby limiting the lowering of the temperature of the mediator solution. As a result, the slowing down of the reaction for the regeneration of the mediator is controlled. Moreover, giving the heat of the steam and oxidant discharged from the regenerator 20 to the oxidant to be supplied to the regenerator 20 reduces the emission of heat to the outside of the fuel cell system 100. This reduces the energy loss and therefore improves the energy efficiency of the fuel cell system 100.

The condenser 44 can be of any kind with which steam can be cooled into condensation. Examples of heat exchangers that can be used as the condenser 44 include a shell-and-tube heat exchanger, a plate heat exchanger, a fin-and-tube heat exchanger, and a double-pipe heat exchanger. As illustrated in Fig. 2, the condenser 44 may have the structure of a countercurrent heat exchanger. That is, the direction of flow of the steam discharged from the regenerator 20 may be opposite the direction of flow of the oxidant to be supplied to the regenerator 20.

The oxidant feed path 42 may be thermally insulated to limit the lowering of the temperature of the oxidant heated at the condenser 44 that occurs while the oxidant is disposed in the oxidant feed path 42. For example, the piping forming the oxidant feed path 42 may be covered with a thermal insulator, such as polyurethane foam.

The upstream section 40a of the water collection path 40 may be thermally insulated to limit the lowering of the temperature of the steam discharged from the regenerator 20 that occurs while the steam is in the upstream section 40a of the water collection path 40. The downstream section 40b of the water collection path 40 may be thermally insulated to limit the lowering of the temperature of the condensation produced at the condenser 44 that occurs while the condensation is in the downstream section 40b of the water collection path 40. For example, the piping forming the downstream section 40b of the water collection path 40 may be covered with a thermal insulator, such as polyurethane foam. The piping forming the upstream section 40a of the water collection path 40 may be thermally insulated likewise.

The fluid used in the condenser 44 to cool steam does not need to be the oxidant. For example, air may be used to cool the steam and then discharged to the outside of the fuel cell system 100 directly, rather than being supplied to the regenerator 20.

In this embodiment, the condenser 44 is positioned at a location gravitationally (in the Z direction) higher than the humidifier 51. Such a configuration allows the condensation formed at the condenser 44 to be transported to the humidifier 51 with the help of gravity, rather than using a pump or other accessory devices. The condensation, however, may be supplied from the condenser 44 to the humidifier 51 by the action of a pump or any other accessory device.

The statement "the condenser 44 is positioned at a location higher than the humidifier 51" means that, for example, the two elements are in a positional relationship like the following. That is, if the joint between the downstream section 40b of the water collection path 40 and the condenser 44 is higher than that between the downstream section 40b of the water collection path 40 and the humidifier 51, the condenser 44 can be deemed to be positioned at a location higher than the humidifier 51.

The following describes the principle of operation of the fuel cell system 100. The fuel cell system 100 works with any kind of fuel gas, mediator, and oxidant. The following discusses a case in which the fuel gas is hydrogen gas and the oxidant is oxygen gas by way of example.

The anode 11 of the fuel cell 10 is supplied with hydrogen gas as fuel gas. At the anode 11, hydrogen molecules are separated into protons (H⁺) and electrons (e⁻). The protons then move to the cathode 12 through the electrolyte membrane 13. The electrons move to the cathode 12 via an external circuit.

In this embodiment, the cathode 12 of the fuel cell 10 is supplied with a mediator solution. The mediator in the mediator solution is reduced at the cathode 12, transforming from its oxidized form (Medₒₓ) into reduced form (Med_{red}), and discharged from the cathode 12. After the reaction at the fuel cell 10, the mediator, in its reduced state, is supplied to the regenerator 20 through the circulation path 30. The inside of the regenerator 20 is supplied with an oxidant that comes through the oxidant feed path 42. At the regenerator 20, the reduced mediator is oxidized and as a result regenerated.

The temperature of the mediator solution in the regenerator 20 has been adjusted so that the rate of production of steam from the solution is appropriate. The temperature adjustment may be through the use of the heater 23. The steam produced at the regenerator 20 is guided to the condenser 44 through the upstream section 40a of the water collection path 40. While passing through the first passage 44a of the condenser 44, the steam is cooled by the oxidant (air) flowing through the second passage 44b of the condenser 44 and as a result is condensed. The condensation is guided to the humidifier 51 through the downstream section 40b of the water collection path 40 and used to humidify the fuel gas. The heated oxidant is guided to the regenerator 20 and used to oxidize the mediator.

As the fuel cell 10 continues operating, excess fuel gas is discharged from the anode 11. The excess fuel gas is, for example, supplied to a burner for heating a reformer (not illustrated) through an anode off-gas path 52 and burned. There may be a case in which the excess fuel gas is released into the atmosphere after being thinned with air sufficiently. Alternatively, the excess fuel gas may be reused at the anode 11. In this case, the fuel cell system 100 includes a recycling path (not illustrated), a path that guides the excess fuel gas from the anode off-gas path 52 to the fuel gas feed path 50.

The following describes some other embodiments. Any element in common with Embodiment 1 is referenced by the same designator as in Embodiment 1 without repeated description. Descriptions may be true across different embodiments unless technically contradictory. Different embodiments may be combined unless technically contradictory.

### Embodiment 2

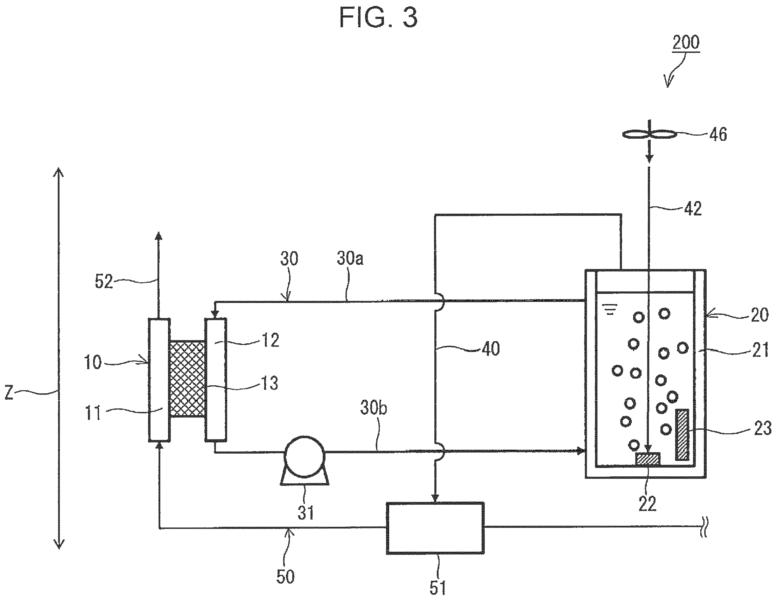

Fig. 3 illustrates the construction of a fuel cell system according to Embodiment 2. The fuel cell system 200 is different from the fuel cell system 100 of Embodiment 1 in that it has no condenser 44. If the humidifier 51 can humidify the fuel gas without liquid water, the condenser 44 can be omitted.

In this embodiment, the humidifier 51 can be, for example, a humidifier of the total heat exchanger type that uses hollow fiber. A humidifier of the total heat exchanger type that uses hollow fiber humidifies the fuel gas using steam penetrating through the hollow fiber. While the fuel gas passes through the hollow fiber, water or steam passes through a passage provided outside the hollow fiber.

### Embodiment 3

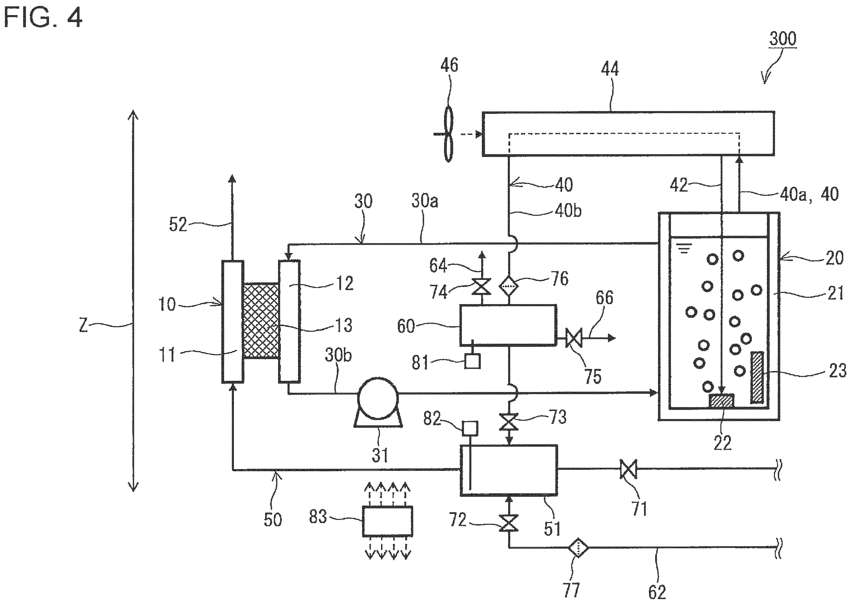

Fig. 4 illustrates the construction of a fuel cell system according to Embodiment 3. The fuel cell system 300 further includes a water tank 60 placed in the water collection path 40, specifically in the downstream section 40b of the water collection path 40. The water tank 60 stores condensation temporarily. The use of a water tank 60 provides a way to control the water supply to the humidifier 51 or, in other words, prevents excessive water from being supplied to the humidifier 51.

The water tank 60 also serves as a gas-liquid separator. The gas discharged from the regenerator 20 contains steam and air as the oxidant. Part of the steam is converted into condensation at the condenser 44. At the water tank 60, the condensation and the gas containing steam and air are separated.

To be more specific, the fuel cell system 300 includes a gas exhaust path 64 and a water drain path 66. The gas exhaust path 64 and water drain path 66 are connected to the water tank 60 and extend to the outside of the fuel cell system 300, for example the outside of the enclosure of the fuel cell system 300. The gas exhaust path 64 is equipped with a valve 74, and the water drain path 66 is equipped with a valve 75. The valves 74 and 75 may be on-off valves or flow regulator valves. Opening the valve 74 lets gas (primarily air) out of the water tank 60 through the gas exhaust path 64, reducing the internal pressure of the water tank 60. Opening the valve 75 lets condensation out of the water tank 60 through the water drain path 66.

The water collection path 40 is equipped with a valve 73 and a filter 76. The valve 73 is positioned between the water tank 60 and the humidifier 51 within the water collection path 40. The valve 73 may be an on-off valve or flow regulator valve. By operating the valve 73, the user can control the flow rate of the condensation to be supplied to the humidifier 51. The filter 76 is positioned between the condenser 44 and the water tank 60 within the water collection path 40. The filter 76 removes impurities from the condensation when the condensation passes through it. The filter 76 can be of any kind. To name a few, a porous membrane, ion-exchange membrane, or combination thereof can be used as the filter 76.

To the humidifier 51, a water feed path 62 is connected. The water feed path 62 is equipped with a valve 72 and a filter 77. Through the water feed path 62 water (e.g., public water) is supplied to the humidifier 51. Opening the valve 72 releases a supply of public water to the humidifier 51. After the humidifier 51 uses up water, the user can continue humidifying the fuel gas by replenishing the humidifier 51 with public water through the water feed path 62. The filter 77 removes impurities from the public water when the public water passes through it. The filter 77, too, can be of any kind. To name a few, a porous membrane, ion-exchange membrane, or combination thereof can be used as the filter 77.

The fuel gas feed path 50 is equipped with a valve 71. The valve 71 may be an on-off valve or flow regulator valve. By operating the valve 71, the user can control the flow rate of fuel gas in the fuel gas feed path 50.

The fuel cell system 300 further includes a pressure sensor 81. The pressure sensor 81 detects the pressure inside the water tank 60. The pressure sensor 81 has been, for example, fitted to the water tank 60. Where to place the pressure sensor 81 is not critical as long as the pressure inside the water tank 60 can be detected. The pressure sensor 81 may be between the filter 76 and the water tank 60 or between the water tank 60 and the valve 73 within the water collection path 40. The pressure sensor 81 can be of any kind. To name a few, a capacitive pressure sensor, strain gauge pressure sensor, or piezoresistive pressure sensor can be used as the pressure sensor 81. The humidifier 51 has a level sensor 82 fitted thereto. The level sensor 82 detects the water level in the humidifier 51. The level sensor 82, too, can be of any kind. To name a few, a float level sensor, capacitive level sensor, or ultrasonic level sensor can be used as the level sensor 82. The water tank 60 may be equipped with other sensors, such as a water level sensor and a temperature sensor. The humidifier 51 may be equipped with other sensors, such as a pressure sensor and a temperature sensor.

The fuel cell system 300 further includes a controller 83. The controller 83 controls the valves 74 and 75 in accordance with detection signals received from the pressure sensor 81 and the level sensor 82. The controller 83 can be a digital signal processor (DSP) that includes an analog-to-digital (A/D) converter, input and output circuits, computation circuit, memory, etc. The controller 83 contains a program for proper operation of the fuel cell system 300.

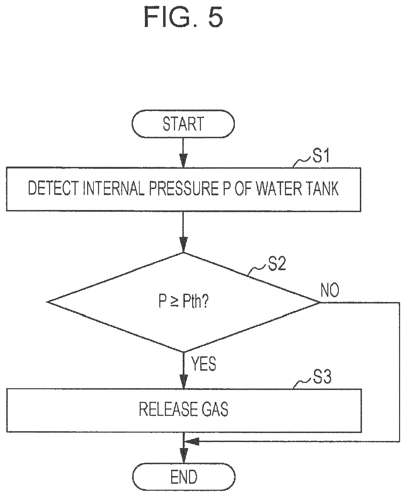

Fig. 5 is a flowchart illustrating the control of the valve 74 in the gas exhaust path 64. The controller 83 regularly executes each process in the flowchart illustrated in Fig. 5. In step S1, the internal pressure P of the water tank 60 is detected using the pressure sensor 81. In step S2, it is determined whether or not the detected internal pressure P is equal to or greater than a threshold pressure Pth. If the internal pressure P is equal to or greater than the threshold pressure Pth, the valve 74 is opened for a predetermined length of time for gas release. The pressure in the water tank 60 is maintained lower than the threshold pressure Pth, and this prevents damage to the fuel cell 10, regenerator 20, water tank 60, condenser 44, and other components. The threshold pressure Pth can be set sufficiently lower than the pressures the individual components can withstand.

It should be understood that the valve 74 may be replaced with a capillary. The use of a capillary allows the pressure inside the water tank 60 to be kept constant without electrical control.

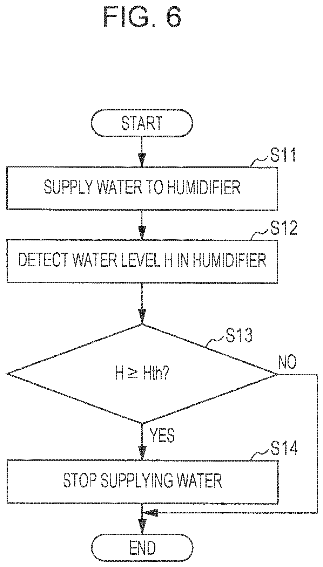

Fig. 6 is a flowchart illustrating the control of the valve 75 in the water drain path 66. The controller 83 regularly executes each process in the flowchart illustrated in Fig. 6. In step S11, the valve 73 in the water collection path 40 is opened to supply condensation to the humidifier 51. In step S12, the water level H in the humidifier 51 is detected using the level sensor 82. In step S13, it is determined whether or not the detected water level H is equal to or higher than a threshold water level Hth. If the water level H is equal to or higher than the threshold water level Hth, the valve 73 is closed for a predetermined length of time to stop supplying water to the humidifier 51. This maintains the water level in the humidifier 51 lower than the threshold water level Hth.

It is to be noted that the control of the water level in the humidifier 51 is optional. The humidifier 51 may be constructed so that excess water flows out and as a result is discharged when the water level exceeds a threshold water level Hth.

The technology disclosed herein is useful in fuel cell systems.

## Claims

1. A fuel cell system comprising:
a fuel cell that includes an anode and a cathode, and generates electricity by reducing a mediator at the cathode;
a regenerator that oxidizes the mediator;
a fuel gas feed path through which fuel gas to be supplied to the anode flows;
a humidifier that is disposed in the fuel gas feed path and humidifies the fuel gas; and
a water collection path that extends from the regenerator to the humidifier and guides to the humidifier at least one selected from steam produced at the regenerator and condensation formed from the steam.

2. The fuel cell system according to Claim 1, further comprising a condenser that is disposed in the water collection path and produces the condensation by condensing the steam discharged from the regenerator.

3. The fuel cell system according to Claim 2, wherein the condenser is positioned at a location gravitationally higher than the humidifier.

4. The fuel cell system according to Claim 2, further comprising an oxidant feed path through which an oxidant for oxidizing the mediator at the regenerator flows, wherein
the condenser includes a heat exchanger that exchanges heat between the oxidant flowing through the oxidant feed path and the steam flowing through the water collection path, and
the oxidant is heated by the steam at the condenser.

5. The fuel cell system according to Claim 1, further comprising a circulation path that connects the fuel cell and the regenerator in such a manner that a solution containing the mediator circulates between the cathode of the fuel cell and the regenerator.
